# EUROPEAN PATENT APPLICATION

(11) **EP 1 865 622 A1**
(43) Date of publication of application: **12.12.2007**
(21) Application number: 06729803.4
(22) Date of filing: 23.03.2006
(51) Int. Cl.: H04B 7/15, H04H 1/00

(54) **TRANSMISSION SYSTEM, TRANSMITTING SIDE TRANSMITTER, TRANSMISSION METHOD AND COMPUTER PROGRAM**

(30) Priority: 23.03.2005 JP 2005084307
(71) Applicant: Pioneer Corporation, Tokyo 153-8654 (JP)
(72) Inventor: SHINOKURA, Kiichiro, Pioneer Corporation, Ohmor inishi 4-chome, Ohta-ku, Tokyo, 1438564 (JP); AKIYAMA, Toru, Pioneer Corporation, Ohta-ku, Tokyo, 1438564 (JP)
(74) Representative: Viering, Jentschura & Partner
(86) International application number: PCT/JP2006/305855
(87) International publication number: WO 2006/101179

(57) **Abstract**

A transmission system (1) is provided with: a transmission-side transmitter (100); and a reception-side transmitter (200), the transmission-side transmitter is provided with: a first transmitting device (115) for transmitting a plurality of channel information, each of which is transmitted, by using corresponding plurality of frequency bands; a selecting device (112) for selecting one portion of the frequency bands corresponding to one portion of the plurality of channel information; a second transmitting device (115) for transmitting the one portion of the channel information, which is transmitted from the exterior, by using at least the selected one portion of the frequency bands; and a switching device (116) for switching between the transmission by the first transmitting device and the transmission by the second transmitting device, the reception-side transmitter is provided with: a receiving device (211) for receiving the plurality of channel information and/or the one portion of the channel information.

## Description

### Technical Field

The present invention relates to a transmission system, a transmission-side transmitter, and a transmission method, which wirelessly transmit a received broadcast electric wave to each terminal, and a computer program which is used for the transmission system.

### Background Art

Research and development has been promoted on a method of receiving a broadcast signal (or broadcast electric wave), such as satellite broadcasting and terrestrial broadcasting, on a representative antenna and then wirelessly transmitting the received broadcast signal to a user terminal, such as a television and a recorder. For example, there is the following method: on a transmission-side terminal including the representative antenna, a broadcast signal is amplified and upconverted to e.g. a high-frequency electric wave, or media-converted to light, and then wirelessly transmitted to a reception-side terminal, and on the reception-side terminal, the broadcast signal, which is upconverted to a high-frequency electric wave or media-converted to light, is downconverted or media-converted to an electric signal, and then wired-transmitted or wirelessly transmitted to a user terminal. In particular, a patent document 1 discloses such construction that a pilot signal having a constant frequency is superimposed onto the broadcast signal in almost the same frequency band as that of the broadcast signal and that the amplification level of the broadcast signal on the transmission-side terminal is adjusted in accordance with the signal level of the pilot signal.

Incidentally, for reference, in the field of a digital broadcast system which employs code division multiplexing, a patent document 2 discloses such a digital broadcast station that performs multiplexing a plurality of channel information by diffusing them with using different diffusion codes and that wirelessly transmits the multiplexed signal to a plurality of reception stations by variably setting a transmission power for each channel, individually, in accordance with the application of each channel. Moreover, in the field of a CATV system, a patent document 3 discloses such a CATV system that transmits the signals of a plurality of channels by selectively distributing them from a center station to a subscriber receiving apparatus. Moreover, in the field of a simplex wireless machine, a patent document 4 discloses such a simplex wireless machine in which the state is witched from a transmittable / receivable state by a first frequency to a transmittable / receivable state by a second frequency, in accordance with the output signal level of a filter for extracting a signal with the second frequency, which is different from the first frequency.
Patent document 1: Japanese Patent Application Laid Open NO. 2004-235758
Patent document 2: Japanese Patent Application Laid Open NO. 2002-94393
Patent document 3: Japanese Patent Application Laid Open NO. Hei 7-322236
Patent document 4: Japanese Patent Application Laid Open NO. 2001-203604

### Disclosure of Invention

### Subject to be Solved by the Invention

As the wireless transmission method to obtain a large transmission capacity described above, there is such a method that uses light and electric waves. If the broadcast signal is transmitted by using light from the transmission-side terminal to the reception-side terminal, there is such a technical problem that blocking or cutting-off caused by a human being, a building or the like becomes serious and that the broadcast signal is hardly preferably transmitted or cannot be transmitted, because of light properties such as rectilinear propagation. Thus, it can be considered to use a high-frequency electric wave for the transmission of the broadcast signal from the transmission-side terminal to the reception-side terminal.

However, even if an electric wave having a frequency of e.g. 60GHz is used, electric-wave intensity as a whole, which is related to the transmission of the broadcast signal from the transmission-side terminal to the reception-side terminal, is limited to be low by a specified low power limit or the like. This causes such a technical problem that an electric power assigned per one channel becomes low. This may lead to such a problem that the broadcast signal cannot be transmitted, depending on the distance between the transmission-side terminal and the reception-side terminal and the presence of an obstacle.

In view of the aforementioned conventional problems, it is therefore an object of the present invention to provide a transmission system, a transmission-side transmitter, and a transmission method, which allow a broadcast signal to be preferably transmitted from a transmission-side terminal to a reception-side terminal, and a computer program which makes a computer function as such a transmission system.

### Means for Solving the Subject

### (Transmission System)

The above object of the present invention can be achieved by a transmission system provided with: a transmission-side transmitter; and a reception-side transmitter, the transmission-side transmitter provided with: a first transmitting device for transmitting a plurality of channel information, each of which is transmitted from an exterior, by using corresponding plurality of frequency bands; a selecting device for selecting one portion of the frequency bands corresponding to one portion of the plurality of channel information; a second transmitting device for transmitting the one portion of the channel information, which is transmitted from the exterior, by using at least the selected one portion of the frequency bands; and a switching device for switching between the transmission by the first transmitting device and the transmission by the second transmitting device, the reception-side transmitter provided with: a receiving device for receiving the plurality of channel information and/or the one portion of the channel information, which is transmitted from the transmission-side transmitter.

According to the transmission system of the present invention, it is possible to transmit a broadcast signal including the plurality of channel information, which are received by an antenna or the like connected to a transmission-side receptor, from the transmission-side transmitter to the reception-side transmitter. After that, the broadcast signal is transmitted from the reception-side transmitter to a user terminal, such as a television and a recorder, by which a user can watch or record the content related to the desired channel information.

More specifically, by virtue of the operation of the first transmitting device, each of the plurality of channel information is transmitted from the transmission-side transmitter to the reception-side transmitter. Each of the plurality of channel information is transmitted from the exterior to the transmission-side receptor by using the corresponding frequency band. For example, one channel information is transmitted by using corresponding one frequency band, and another channel information is transmitted by using corresponding another frequency band.

On the other hand, by virtue of the operation of the selecting device, one portion of the plurality of channel information (or one portion of the frequency bands corresponding to the one portion of the channel information) is selected from the plurality of frequency bands. For example, one portion of the frequency bands corresponding to the one portion of the channel information that a user desires to receive is selected. After that, the one portion of the channel information, which is transmitted by using at least the selected frequency band, is transmitted by the operation of the second transmitting device from the transmission-side transmitter to the reception-side transmitter.

At this time, by virtue of the operation of the switching device, it is switched whether the plurality of channel information is transmitted to the reception-side transmitter by the first transmitting device, or at least one portion of the channel information is transmitted to the reception-side transmitter by the second transmitting device. This may be constructed such that it is switched whether or not the frequency band corresponding to the one portion of the channel information is selected by the selecting device, to thereby switch whether the plurality of channel information is transmitted to the reception-side transmitter by the first transmitting device, or at least one portion of the channel information is transmitted to the reception-side transmitter by the second transmitting device.

As explained above, according to the transmission system of the present invention, as occasion demands, the one portion of the plurality of channel information is selectively transmitted to the reception-side transmitter. Therefore, in this case, it is only necessary to assign a transmission power whose maximum value is limited, not to all the plurality of channel information transmitted from the exterior, but to the one portion of the channel information which is actually transmitted. Therefore, the one portion of the channel information which is actually transmitted can be transmitted to the reception-side transmitter with a preferable transmission power. Thus, it is possible to transmit the desired channel information from the transmission-side transmitter to the reception-side transmitter without reducing the transmission power which is assigned per one channel. On the other hand, if it is desired to transmit all the plurality of channel information, all the plurality of channel information can be transmitted by virtue of the operation of the switching device. This allows the broadcast including the plurality of channel information to be preferably transmitted from the transmission-side transmitter to the reception-side transmitter.

In one aspect of the transmission system of the present invention, the reception-side transmitter is further provided with a third transmitting device for transmitting necessary-channel-information which indicates channel information to be transmitted to the reception-side transmitter, out of the plurality of channel information, to the transmission-side transmitter, and the selecting device selects the one portion of the frequency bands corresponding to the one portion of the channel information, on the basis of the transmitted necessary-channel-information.

According to this aspect, it is possible to select the one portion of the frequency bands corresponding to the one portion of the channel information, on the basis of the necessary-channel-information, which is transmitted from the reception-side transmitter actually connected to the user terminal. For example, if the necessary-channel-information indicates that the one portion of the channel information is to be transmitted, the corresponding one portion of the frequency bands is selected by the selecting device, and then the one portion of the channel information indicated by the necessary-channel-information is transmitted to the reception-side transmitter by the second transmitting device. On the other hand, for example, if the necessary-channel-information indicates that each of the plurality of channel information is to be transmitted, each of the plurality of channel information is transmitted to the reception-side transmitter by the first transmitting device. That is, the switching device may perform the switching operation with reference to the substance of the necessary-channel-information. Therefore, it is possible to select the frequency band, more preferably, in accordance with a user's favorites, an actual state of receiving the plurality of channel information, or the like, and it is also possible to determine the channel information to be transmitted, more preferably.

In an aspect of the transmission system in which the necessary-channel-information is transmitted as described above, the reception-side transmitter may be connected to a reproducing apparatus which can reproduce such content that is based on desired channel information out of the plurality of channel information, by tuning a desired frequency band out of the plurality of frequency bands, and the reception-side transmitter may be further provided with a generating device for generating the necessary-channel-information from a leakage signal which returns from the reproducing apparatus.

By virtue of such construction, it is possible to relatively easily generate the preferably necessary-channel-information on the basis of the leakage signal from a tuner for tuning, to thereby determine the channel information to be transmitted, more preferably.

In an aspect of the transmission system in which the necessary-channel-information is transmitted as described above, the reception-side transmitter may be further provided with a generating device for generating the necessary-channel-information on the basis of at least one of a an EPG (Electronic Program Guide) selecting orientation of a user who watches content based on each of the plurality of channel information, the user's favorite content, the content which the user frequently watches, substance of the content, the content which the user is currently watching or recording, and the content related to the content which the user is currently watching or recording.

By virtue of such construction, it is possible to generate the necessary-channel-information, more preferably and relatively easily, in accordance with a user's favorites, an actual state of receiving the plurality of channel information, or the like, to thereby determine the channel information to be transmitted, more preferably.

In an aspect of the transmission system in which the necessary-channel-information is transmitted as described above, the reception-side transmitter may be further provided with a generating device for generating the necessary-channel-information on the basis of a content watching time of a user who watches the content based on each of the plurality of channel information.

By virtue of such construction, it is possible to generate the necessary-channel-information in accordance with the content watching time. For example, if the content watching time is relatively long, it is considered that the user is watching the content, and the necessary-channel-information is generated so as to transmit the channel information related to the relevant content. On the other hand, if the content watching time is relatively short, it is considered that the user is zapping each channel, and the necessary-channel-information is generated so as to transmit the plurality of channel information or main part of the channel information. As a result, it is possible to determine the channel information to be transmitted, more preferably.

In another aspect of the transmission system of the present invention, it is further provided with an amplifying device for amplifying a transmission power in the selected one portion of the frequency band.

According to this aspect, it is possible to transmit the one portion of the channel information, which is transmitted from the exterior by using the selected frequency band, to the reception-side transmitter with a preferable transmission power.

In another aspect of the transmission system of the present invention, it is further provided with an amplifying device for amplifying a transmission power in the selected one portion of the frequency bands such that the transmission power in the selected one portion of the frequency bands is greater than a transmission power in another frequency band of the plurality of frequency bands which is not selected by the selecting device, the second transmitting device transmitting the plurality of channel information including the one portion of the channel information.

According to this aspect, it is possible to transmit the one portion of the channel information, which is transmitted by using the selected frequency band, to the reception-side transmitter with a preferable transmission power. Moreover, it is also possible to transmit another portion of the channel information which is transmitted in the not-selected frequency band to the reception-side transmitter, although the transmission power is relatively small.

In another aspect of the transmission system of the present invention, it is further provided with an attenuating device for attenuating a transmission power in an another frequency of the plurality of frequency bands which is not selected by the selecting device such that a transmission power in the selected one portion of the frequency bands is greater than the transmission power in the not-selected another frequency band, the second transmitting device transmitting the plurality of channel information including the one portion of the channel information.

According to this aspect, it is possible to transmit the one portion of the channel information, which is transmitted by using the selected frequency band, to the reception-side transmitter with a preferable transmission power. Moreover, it is also possible to transmit another portion of the channel information which is transmitted in the not-selected frequency band to the reception-side transmitter, although the transmission power is relatively small.

In another aspect of the transmission system of the present invention, it is further provided with a normalizing device for making an entire transmission power of each of the plurality of channel information, which is transmitted by the first transmitting device, and at least the one portion of the channel information, which is transmitted by the second transmitting device, constant.

According to this aspect, it is possible to receive the aforementioned various benefits while preferably satisfying a specified low power limit or the like.

### (Transmission-side Transmitter)

The above object of the present invention can be also achieved by a transmission-side transmitter provided with: a first transmitting device for transmitting a plurality of channel information, each of which is transmitted from an exterior, to a reception-side transmitter by using corresponding plurality of frequency bands; a selecting device for selecting one portion of the frequency bands corresponding to one portion of the plurality of channel information; a second transmitting device for transmitting the one portion of the channel information, which is transmitted from the exterior, by using at least the selected one portion of the frequency bands; and a switching device for switching between the transmission by the first transmitting device and the transmission by the second transmitting device.

According to the transmission-side transmitter of the present invention (or so-called transmission-side transmitter in the transmission system of the present invention described above), it is possible to receive the same benefits as those of the transmission system of the present invention.

Incidentally, in response to the various aspects of the aforementioned transmission system of the present invention, the transmission-side transmitter of the present invention can also adopt various aspects.

In one aspect of the transmission-side transmitter of the present invention, is further provided with a receiving device for receiving necessary-channel-information which indicates channel information to be transmitted to the reception-side transmitter, out of the plurality of channel information, the necessary-channel-information being transmitted from the reception-side transmitter, and the selecting device selects the one portion of the frequency bands corresponding to the one portion of the channel information, on the basis of the received necessary-channel-information.

According to this aspect, it is possible to select the frequency band corresponding to the one portion of the channel information, on the basis of the necessary-channel-information, which is transmitted to the reception-side transmitter actually connected to the user terminal. Therefore, it is possible to select the frequency band, more preferably, in accordance with a user's favorites, an actual state of receiving the plurality of channel information, or the like, and it is also possible to determine the channel information to be transmitted, more preferably.

In another aspect of the transmission-side transmitter of the present invention, it is further provided with an amplifying device for amplifying a transmission power in the selected one portion of the frequency bands.

According to this aspect, it is possible to transmit the one portion of the channel information, which is transmitted by using the selected frequency band, to the reception-side transmitter with a preferable transmission power.

In another aspect of the transmission-side transmitter of the present invention, it is further provided with an amplifying device for amplifying a transmission power in the selected one portion of the frequency bands such that the transmission power in the selected one portion of the frequency bands is greater than a transmission power in another frequency band of the plurality of frequency bands which is not selected by the selecting device, the second transmitting device transmitting the plurality of channel information including the one portion of the channel information, to the reception-side transmitter.

According to this aspect, it is possible to transmit the one portion of the channel information, which is transmitted by using the selected frequency band, to the reception-side transmitter with a preferable transmission power. Moreover, it is also possible to transmit another portion of the channel information which is transmitted in the not-selected frequency band to the reception-side transmitter, although the transmission power is relatively small.

In another aspect of the transmission-side transmitter of the present invention, it is further provided with an attenuating device for attenuating a transmission power in an another frequency of the plurality of frequency bands which is not selected by the selecting device such that a transmission power in the selected one portion of the frequency bands is greater than the transmission power in the not-selected another frequency band, the second transmitting device transmitting the plurality of channel information including the one portion of the channel information, to the reception-side transmitter.

According to this aspect, it is possible to transmit the one portion of the channel information, which is transmitted by using the selected frequency band, to the reception-side transmitter with a preferable transmission power. Moreover, it is also possible to transmit another portion of the channel information which is transmitted in the not-selected frequency band to the reception-side transmitter, although the transmission power is relatively small.

In another aspect of the transmission-side transmitter of the present invention, it is further provided with a normalizing device for making an entire transmission power of each of the plurality of channel information, which is transmitted by the first transmitting device, and at least the one portion of the channel information, which is transmitted by the second transmitting device, constant.

According to this aspect, it is possible to receive the aforementioned various benefits while preferably satisfying a specified low power limit or the like.

### (Transmission Method)

The above object of the present invention can be also achieved by a transmission method provided with: a first transmitting process of transmitting a plurality of channel information, each of which is transmitted from an exterior, by using corresponding plurality of frequency bands; a selecting process of selecting one portion of the frequency bands corresponding to one portion of the plurality of channel information; a second transmitting process of transmitting the one portion of the channel information, which is transmitted from the exterior, by using at least the selected one portion of the frequency bands; a switching process of switching between the transmission in the first transmitting process and the transmission in the second transmitting process; and a receiving process of receiving the plurality of channel information and/or the one portion of the channel information, which is transmitted.

According to the transmission method of the present invention, it is possible to receive the same various benefits as those of the transmission system of the present invention.

Incidentally, in response to the various aspects of the aforementioned transmission system of the present invention, the transmission method of the present invention can also adopt various aspects.

### (Computer Program)

The above object of the present invention can be also achieved by a computer program for transmission control to control a computer provided in the aforementioned transmission system of the present invention (including its various aspects), the computer program making the computer function as at least one portion of the transmission-side transmitter and the reception-side transmitter.

According to the computer program of the present invention, the aforementioned transmission system of the present invention can be relatively easily realized as a computer reads and executes the computer program from a program storage device, such as a ROM, a CD-ROM, a DVD-ROM, and a hard disk, or as it executes the computer program after downloading the program through a communication device.

Incidentally, in response to the various aspects of the aforementioned transmission system of the present invention, the computer program of the present invention can also adopt various aspects.

The above object of the present invention can be also achieved by a computer program product in a computer-readable medium for tangibly embodying a program of instructions executable by a computer provided in the aforementioned transmission system of the present invention (including its various aspects), the computer program product making the computer function as at least one portion of the transmission-side transmitter and the reception-side transmitter.

According to the computer program product of the present invention, the aforementioned transmission system of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned transmission system of the present invention.

These effects and other advantages of the present invention will become more apparent from the embodiment explained below.

As explained above, according to the transmission system of the present invention, it is provided with the first transmitting device, the selecting device, the second transmitting device, the switching device, and the receiving device. According to the transmission method of the present invention, it is provided with the first transmitting process, the selecting process, the second transmitting process, the switching process, and the receiving process. Moreover, according to the transmission-side transmitter of the present invention, it is provided with the first transmitting device, the selecting device, the second transmitting device, and the switching device. Therefore, it is possible to transmit the broadcast signal from the transmission-side terminal to the reception-side terminal, preferably.

### Brief Description of Drawings

[FIG. 1] FIG. 1 is a block diagram conceptually showing the basic structure of a transmission system in an embodiment.
[FIG. 2] FIG. 2 is a flowchart conceptually showing the operation principle of the transmission system in the embodiment.
[FIG. 3] FIG. 3 is one spectrum chart showing a plurality of channel information, which is included in a broadcast signal, in each frequency.
[FIG. 4] FIG. 4 is a block diagram conceptually showing a transmission system provided with a plurality of reception-side transmitters.
[FIG. 5] FIG. 5 is another spectrum chart showing a plurality of channel information, which is included in a broadcast signal, in each frequency.
[FIG. 6] FIG. 6 is a block diagram conceptually showing a more detailed first structure of the transmission system in the embodiment.
[FIG. 7] FIG. 7 is a block diagram conceptually showing a more detailed second structure of the transmission system in the embodiment.
[FIG. 8] FIG. 8 is a block diagram conceptually showing a more detailed third structure of the transmission system in the embodiment.
[FIG. 9] FIG. 9 is a block diagram conceptually showing the basic structure of a transmission system in a modified example.

### Description of Reference Codes

- 1: transmission system
- 100: transmission-side transmitter
- 112: selection / amplification circuit
- 113: necessary-frequency-information reception circuit
- 114: upconverter
- 115: transmission circuit
- 116: shift circuit
- 200: reception-side transmitter
- 211: reception circuit
- 212: downconverter
- 214: necessary-frequency-information generation circuit
- 215: necessary-frequency-information transmission circuit

### Best Mode for Carrying Out the Invention

Hereinafter, the best mode for carrying out the present invention will be explained in each embodiment in order with reference to the drawings.

### (1) Basic Structure

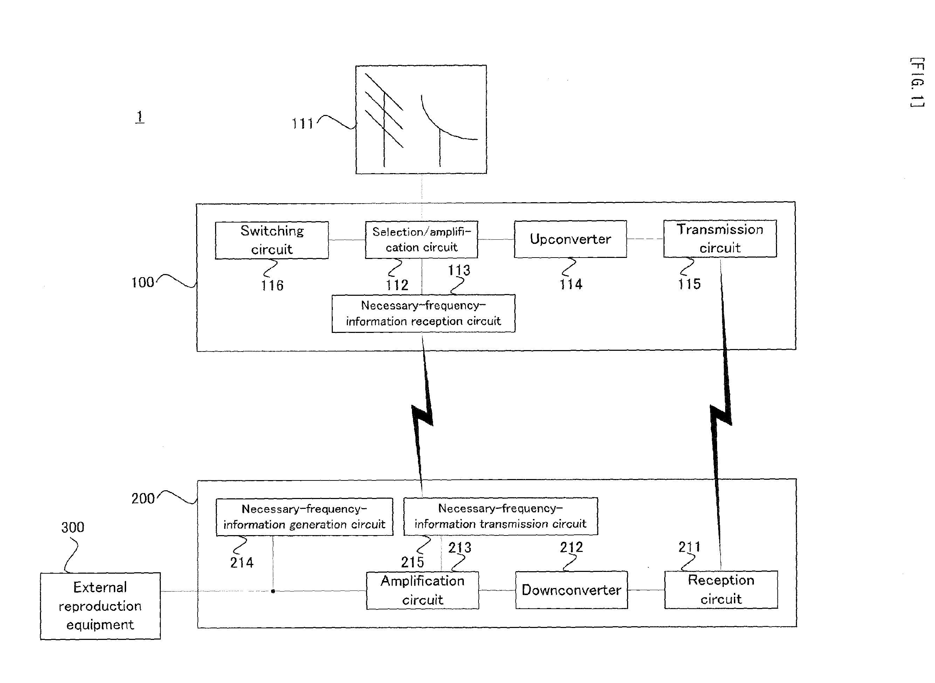

Firstly, with reference to FIG. 1, the basic structure of a transmission system in an embodiment will be explained. FIG. 1 is a block diagram conceptually showing the basic structure of a transmission system 1 in the embodiment.

As shown in FIG. 1, the transmission system 1 in the embodiment includes a transmission-side transmitter 100 and a reception-side transmitter 200, wherein the transmission-side transmitter 100 is provided with: a reception antennal 111; a selection / amplification circuit 112; a necessary-frequency-information reception circuit 113; an upconverter 114; a transmission circuit 115; and a switching circuit 116, and the reception-side transmitter 200 is provided with: a reception circuit 211; a downconverter 212; an amplification circuit 213; a frequency detection circuit 214; and a necessary-frequency-information transmission circuit 215. As an example of how to use the transmission-side transmitter 100 and the reception-side transmitter 200, there is listed such construction that a common transmission-side transmitter 100 is provided in a housing complex, such as a condominium building, and individual reception-side transmitters 200 are provided in respective rooms.

The reception antenna 111 is adapted to receive a broadcast signal (or broadcast electric wave) which is wirelessly transmitted or wired-transmitted from a broadcast satellite or a broadcast station. The broadcast signal includes a plurality of channel information (or program information) and is transmitted from the broadcast satellite or the broadcast station by using an electric wave or the like with a predetermined frequency. Each of the channel information is transmitted by using a corresponding frequency band with a predetermined bandwidth, out of the electric wave or the like with the predetermined frequency.

The selection / amplification circuit 112 constitutes one specific example of the "selecting device" and the "amplifying device" of the preset invention, and it is adapted to select a predetermined frequency band from the broadcast signal outputted from the antenna 111. The selection / amplification circuit 112 also amplifies the broadcast signal related to a part or all of the channel information in the selected frequency band, and outputs it to the upconverter 114. On the other hand, the broadcast signal related to one portion of the channel information in a not-selected frequency band is not amplified nor outputted to the upconverter 114. The selection / amplification circuit 112 includes a BPF (Band Pass Filter) which passes, blocks, or attenuates a signal with a predetermined frequency. The frequency band is selected on the basis of necessary-frequency-information, which is outputted from the necessary-frequency-information reception circuit 113. Incidentally, one example of the necessary-frequency-information is information which indicates a frequency band corresponding to the channel information whose transmission to the reception-side transmitter 200 is desired.

The necessary-frequency-information reception circuit 113 is adapted to receive the necessary-frequency-information, which is transmitted from the reception-side transmitter 200. Moreover, it is adapted to output the received necessary-frequency-information to the selection / amplification circuit 112.

The upconverter 114 is adapted to upconvert the broadcast signal, which is selected and amplified on the selection / amplification circuit 112, to a millimeter-wave-band (60GHz band) signal.

The transmission circuit 115 constitutes one specific example of the "first transmitting device" and the "second transmitting device" of the present invention, and it is adapted to transmit the broadcast signal, which is upconveted into the millimeter band, to the reception circuit 211 in the reception-side transmitter 200. In particular, the transmission circuit 115 is adapted to adjust the transmission power of the entire broadcast signal, which is upconveted into the millimeter band, so as to satisfy a specified low power criterion or the like, and then to transmit the broadcast signal.

The switching circuit 116 constitutes one specific example of the "switching device" of the present invention, and it is adapted to control the selection / amplification circuit 112 to transit from a state in which the frequency band is selected to a state in which the frequency band is not selected or vice versa. In other words, the switching circuit 116 is adapted to switch between a state in which all the plurality of channel information is transmitted from the transmission-side transmitter 100 to the reception-side transmitter 200, and a state in which one portion of the plurality of channel information is transmitted from the transmission-side transmitter 100 to the reception-side transmitter 200.

The reception circuit 211 constitutes one specific example of the "receiving device" of the present invention, and it is adapted to receive the broadcast signal, which is transmitted from the transmission circuit 115 in the transmission-side transmitter 100.

The downconverter 212 is adapted to downconvert the broadcast signal, which is upconverted into the millimeter wave band, to the original frequency.

The amplification circuit 213 is adapted to amplify the downconverted broadcast signal and output it to external reproduction equipment 300, such as a television, a video recorder, and a hard disk drive.

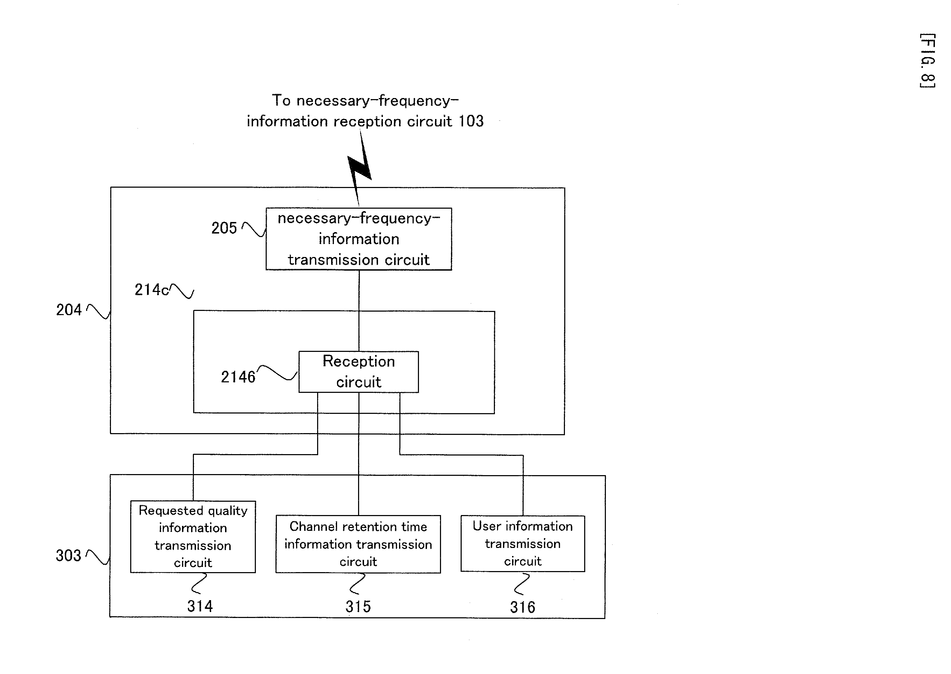

The necessary-frequency-information generation circuit 214 constitutes one specific example of the "generating device" of the present invention, and it is adapted to generate the necessary-frequency-information. The generation of the necessary-frequency-information will be detailed later (refer to FIG .6 to FIG. 8).

The necessary-frequency-information transmission circuit 215 constitutes one specific example of the "third transmitting device" of the present invention, and it is adapted to transmit the necessary-frequency-information, which is generated on the necessary-frequency-information generation circuit 214, to the necessary-frequency-information reception circuit 213 in the transmission-side transmitter 100. Here, an arbitrary wireless device, such as Bluetooth, can be used.

Incidentally, the reception-side transmitter 200 is separated from and independent of the external reproduction equipment 300 in FIG .1; however, the reception-side transmitter 200 may be disposed within the external reproduction equipment 300, or the external reproduction equipment 300 and the reception-side transmitter 200 may be unified.

### (2) Operation Principle

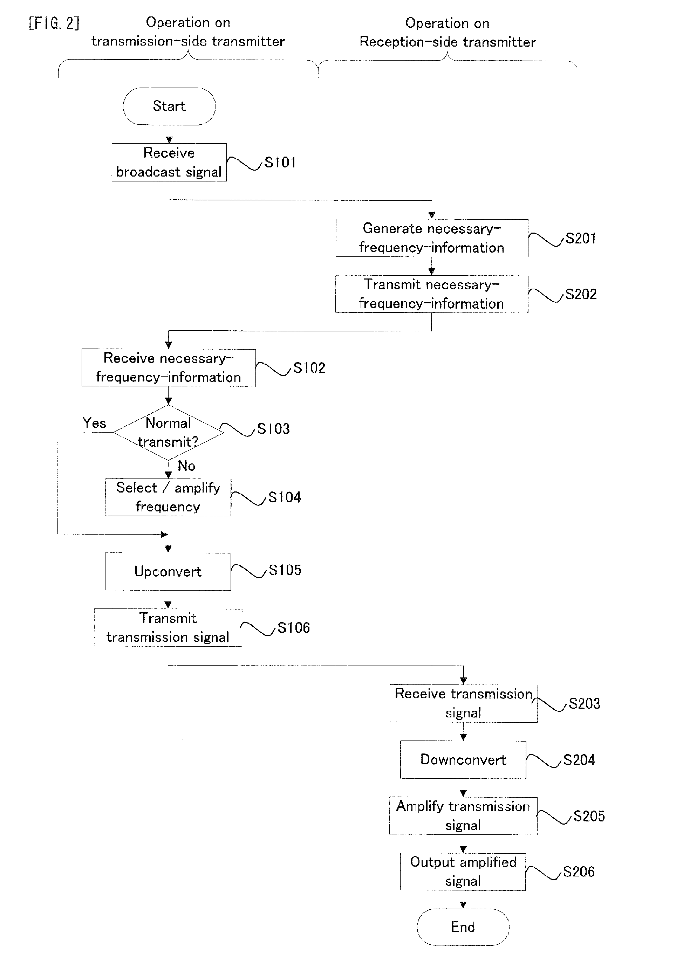

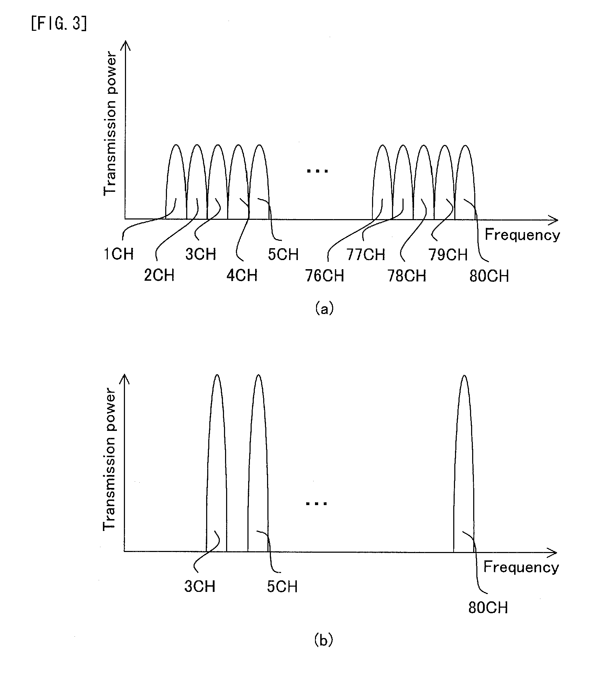

Next, with reference to FIG. 2 to FIG. 5, the operation principle of the transmission system 1 in the embodiment will be explained. Here, FIG. 2 is used to explain the main part of the operation principle of the transmission system 1 in the embodiment, and FIG. 3 to FIG. 5 are appropriately referred to for a supplementary or further detailed explanation. FIG. 2 is a flowchart conceptually showing the operation principle of the transmission system 1 in the embodiment.

As shown in FIG. 2, firstly, the broadcast signal, which is transmitted from a broadcast satellite or a broadcast station, is received on the antenna 111 of the transmission-side transmitter 100 (step S101).

In parallel with this or after this, the necessary-frequency-information is generated on the necessary-frequency-information generation circuit 214 in the reception-side transmitter 200 (step S201). The generated necessary-frequency-information is transmitted from the necessary-frequency-information transmission circuit 215 in the reception-side transmitter 200 to the necessary-frequency-information reception circuit in the transmission-side transmitter 100 (step S202).

After that, the necessary-frequency-information, which is transmitted from the necessary-frequency-information transmission circuit 215 in the reception-side transmitter 200, is received by the necessary-frequency-information reception circuit 113 in the transmission-side transmitter 100 (step S102).

Then, it is judged whether or not the broadcast signal is normally transmitted from the transmission-side transmitter 100 to the reception-side transmitter 200 (step S103). More specifically, it is judged whether all of the plurality of channel information included in the broadcast signal is transmitted to the reception-side transmitter 200 (i.e. normal transmission is performed), or one portion of the plurality of channel information included in the broadcast signal is transmitted to the reception-side transmitter 200 (i.e. normal transmission is not performed). The judgment is performed on the basis of the necessary-frequency-information, which is received in the step S102. If the necessary-frequency-information indicates that all of the plurality of channel information included in the broadcast signal is transmitted to the reception-side transmitter 200, it is judged that the normal transmission is performed. On the other hand, if the necessary-frequency-information indicates that one portion of the plurality of channel information included in the broadcast signal is transmitted to the reception-side transmitter 200, it is judged that the normal transmission is not performed.

As a result of the judgment, if it is judged that the normal transmission is not performed (the step S103: No), one portion of the frequency bands to be transmitted is (are) selected by the selection / amplification circuit 112 on the basis of the necessary-frequency-information, which is received in the step S102, and the broadcast signal related to the selected frequency band (bands) is amplified (step S104). After that, the amplified broadcast signal is upconverted to a millimeter-wave-band signal (step S105), and the upconverted broadcast signal is transmitted to the reception circuit 211 in the reception-side transmitter 200 (step S106).

On the other hand, if it is judged that the normal transmission is performed (the step S103: Yes), the switching circuit 116 controls the selection / amplification circuit 112 not to select the frequency band. As a result, on the selection / amplification circuit 112, the frequency band is not selected, and the entire broadcast signal, which is received in the step S101, is amplified. After that, the amplified broadcast signal is upconverted to a millimeter-wave-band signal by the upconverter 114 (the step S105), and the upconverted broadcast signal is transmitted to the reception circuit 211 in the reception-side transmitter 200 by the transmission circuit 115 (the step S106).

Then, the broadcast signal, which is transmitted in the step S106, is received by the reception circuit 211 in the reception-side transmitter 200 (step S203). After that, the broadcast signal, which is upconverted into the millimeter wave band, is downconverted by the downconverter 203 (step S204). Moreover, the downconverted broadcast signal is amplified by the amplification circuit 213 (step S205). After that, the amplified broadcast signal is outputted from the amplification circuit 213 to the external reproduction equipment 300 (step S206). As a result, the user can watch the content related to the desired channel information from among the plurality of channel information included in the broadcast signal.

Now, with reference to FIGs. 3, a more detailed explanation will be given on the amplification and transmission of the broadcast signal in the selected frequency band. FIGs. 3 are spectrum charts showing the plurality of channel information, which is included in the broadcast signal, in each frequency.

As shown in FIG. 3(a), the broadcast signal, which is transmitted from satellite broadcasting or a broadcast station, includes the channel information corresponding to e.g. 80 channels from 1CH to 80CH. If it is judged that the normal transmission is performed in the step S103, all the channel information corresponding to the 80 channels is transmitted from the transmission-side transmitter 100 to the reception-side transmitter 200. At this time, a transmission power (or electric-wave intensity) as a whole of the broadcast signal, which is transmitted from the transmission-side transmitter 100 to the reception-side transmitter 200, has an upper limit, such as 10dBm, because of a specified low power limit or the like. Therefore, since the transmission power of 10dBm or the like is divided into the channel information corresponding to the 80 channels, the transmission power per one channel information becomes relatively small.

On the other hand, if the necessary-frequency-information indicates that only "3CH", "5CH", and "80CH" are transmitted from among the channel information corresponding to the 80 channels, as shown in FIG. 3(b), the broadcast signal, which is transmitted from the transmission-side transmitter 100 to the reception-side transmitter 200, selectively includes only the frequency band related to the "3CH", "5CH", and "80CH". Even in this case, the transmission power (or electric-wave intensity) as a whole of the broadcast signal, which is transmitted from the transmission-side transmitter 100 to the reception-side transmitter 200, has an upper limit, such as 10dBm, because of the specified low power limit or the like. Therefore, since the transmission power of 10dBm or the like is divided into the channel information corresponding to the three channels of "3CH", "5CH", and "80CH", the transmission power per one channel information becomes relatively large. For example, it is possible to improve C/N (Carrier/Noise) such that it is regarded as using a transmission environment in which the transmission power is 13dBm higher than the case that the broadcast signal including the channel information corresponding to the 80 channels is transmitted.

If the transmission power per one channel information increases, it is possible to transmit the broadcast signal of preferably high transmission quality, to the reception-side transmitter 200 which is disposed away to some extent from the transmission-side transmitter 100 or to the reception-side transmitter 200 having an obstacle between the transmission-side transmitter 100 and the reception-side transmitter 200. Therefore, if the reception-side transmitter 200 does not request the transmission of the channel information corresponding to e.g. 80 channels, it is possible to transmit the broadcast signal of preferably high transmission quality by increasing the transmission power per one channel information. For example, if a user keeps watching one content, the user does not need the transmission of the channel information related to another content. In this case, the transmission power per one channel information is increased by selecting the frequency band to be transmitted, to thereby allow the user to watch the content of higher quality. For example, if the user is watching a movie or the like, it is assumed that the user does not need the transmission of the channel information related to another content that much.

Moreover, since the broadcast signal of higher-transmission-quality is transmitted from the transmission-side transmitter 100, the reception-side transmitter 200 can preferably receive the broadcast signal transmitted from the transmission-side transmitter 100 wherever the user disposes a television in the room. Moreover, even if the user moves in the room and happens to be between the transmission-side transmitter 100 and the reception-side transmitter 200, because the transmission quality of the broadcast signal (or the transmission power per one channel information) is so high that the broadcast signal is hardly cut off, the user can preferably watch the content.

On the other hand, if the reception-side transmitter 200 requests the transmission of the channel information corresponding to e.g. 80 channels, it is possible to transmit the broadcast signal including the channel information corresponding to e.g. 80 channels even if the transmission power per one channel information is reduced. For example, if a user keeps watching many contents while switching them in a short time (i.e. if the user is zapping the contents), the channel information corresponding to e.g. 80 channels needs to be transmitted. In this case, the user can perform zapping by transmitting the channel information corresponding to e.g. 80 channels without selecting the frequency band to be transmitted. For example, if a user is watching news or is watching a television to kill the time, the user likely watch news on other channels or contents on other channels. Thus, it is assumed that the channel information corresponding to e.g. 80 channels needs to be transmitted. Moreover, if a user finds the content the user wants to watch during the zapping, it is also possible to select the frequency band to be transmitted again to increase the transmission power per one channel information.

In any cases, it is possible to preferably transmit the broadcast signal, which is transmitted from satellite broadcasting or a broadcast station, from the transmission-side transmitter 100 to the reception-side transmitter 200. As a result, a user can preferably watch the desired content.

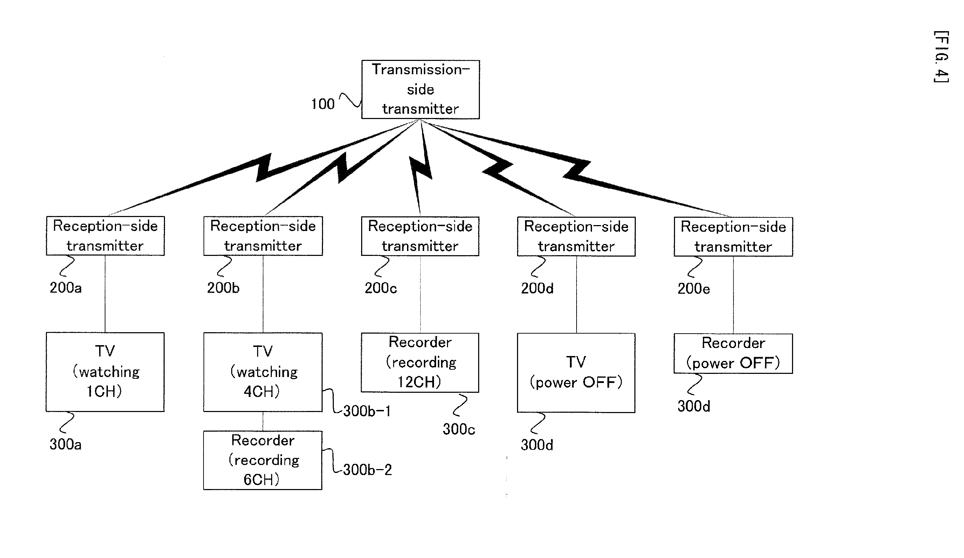

Now with reference to FIG. 4, an explanation will be given on an example in which there is a plurality of reception-side transmitters 200, which is assumed in an accrual use example of the transmission system 1 in the embodiment. FIG. 4 is a block diagram conceptually showing a transmission system provided with the plurality of reception-side transmitters 200.

As shown in FIG. 4, one transmission-side transmitter 100 transmits the broadcast signal to five reception-side transmitters 200a to 200e. On a television 300a as the external reproduction equipment connected to the reception-side transmitter 200a, "1CH" is watched by a user. On a television 300b-1 as the external reproduction equipment connected to the reception-side transmitter 200b, "4CH" is watched by a user. On a recorder 300b-2 as the external reproduction equipment connected to the reception-side transmitter 200b, "6CH" is recorded by a user. On a recorder 300c-2 as the external reproduction equipment connected to the reception-side transmitter 200c, "12CH" is recorded by a user. On a television 300d as the external reproduction equipment connected to the reception-side transmitter 200d, the power is OFF and no content is watched. On a recorder 300e as the external reproduction equipment connected to the reception-side transmitter 200e, the power is OFF and no content is recorded.

In this case, the reception-side transmitter 200a transmits the necessary-frequency-information which indicates that the broadcast signal in the frequency band corresponding to the channel information related to "1CH" is transmitted, to the transmission-side transmitter 100. The reception-side transmitter 200b transmits the necessary-frequency-information which indicates that the broadcast signal in the frequency band corresponding to the channel information related to each of "4CH" and "6CH" is transmitted, to the transmission-side transmitter 100. The reception-side transmitter 200c transmits the necessary-frequency-information which indicates that the broadcast signal in the frequency band corresponding to the channel information related to "12CH" is transmitted, to the transmission-side transmitter 100.

As a result, the transmission-side transmitter 100 selects the frequency band corresponding to the channel information related to each of "1CH", "4CH", "6CH", and "12CH" and transmits the broadcast signal including only the channel information related to each of "1CH", "4CH", "6CH", and "12CH" to respective one of the reception-side transmitters 200a to 200e.

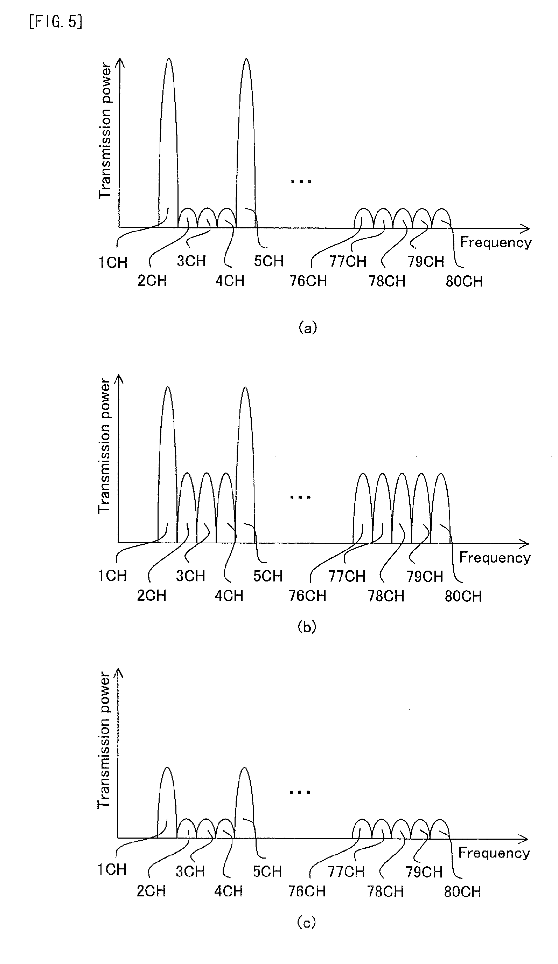

Incidentally, in the aforementioned embodiment, if it is judged that the normal transmission is not performed, the broadcast signal in the frequency band that is not selected on the selection / amplification circuit 112 is not transmitted from the transmission-side transmitter 100 to the reception-side transmitter 200. However, in order to respond to sudden zapping or the like, the broadcast signal in the not-selected frequency band may be transmitted. The broadcast signal in the not-selected frequency band will be explained with reference to FIGs. 5. FIGs. 5 are spectrum charts showing the plurality of channel information, which is included in the broadcast signal, in each frequency.

For example, it is assumed that the reception-side transmitter 200 requests the transmission of the channel information related to each of "1CH" and "5CH" by using the necessary-frequency-information. In this case, as shown in FIG. 5(a), the broadcast signal may be transmitted such that the transmission power of the frequency band corresponding to the channel information about each of "1CH" and "5CH" is relatively large and the transmission power in the frequency band corresponding to the channel information other than "1CH" and "5CH" is relatively small and that the transmission power as a whole is, for example, 10dBm or the like. Incidentally, the transmission power of the frequency band corresponding to the channel information other than "1CH" and "5CH" only needs to be large enough to perform the zapping. However, from the viewpoint of further increasing the transmission power of the frequency band corresponding to the channel information about "1CH" and "5CH", the transmission power of the frequency band corresponding to the channel information other than "1CH" and "5CH" is preferably small.

By virtue of such construction, with regard to the channel information whose transmission is desired, the transmission power per one channel information can be increased, so that a user can watch the content of higher quality. On the other hand, even with regard to the channel information other than the channel information whose transmission is desired, the user can perform the zapping.

In this case, on the selection / amplification circuit 112, as shown in FIG. 5(b), the transmission power of the frequency band corresponding to the channel information about each of "1CH" and "5CH" may be selectively amplified to make the transmission power as a whole, for example, 10dBm or the like on the transmission circuit 115.

Alternatively, on the selection / amplification circuit 112, as shown in FIG. 5(c), the transmission power of the frequency band other than the frequency band corresponding to the channel information about each of "1CH" and "5CH" may be selectively attenuated to make the transmission power as a whole, for example, 10dBm or the like on the transmission circuit 115.

Incidentally, the switching circuit 116 may automatically switch, on the basis of the necessary-frequency-information, whether all the plurality of channel information is transmitted from the transmission-side transmitter 100 to the reception-side transmitter 200, or one portion of the plurality of channel information is transmitted from the transmission-side transmitter 100 to the reception-side transmitter 200. Alternatively, the switching circuit 116 may switch, by a user's instruction, whether all the plurality of channel information is transmitted from the transmission-side transmitter 100 to the reception-side transmitter 200, or one portion of the plurality of channel information is transmitted from the transmission-side transmitter 100 to the reception-side transmitter 200.

### (3) Detailed Structure

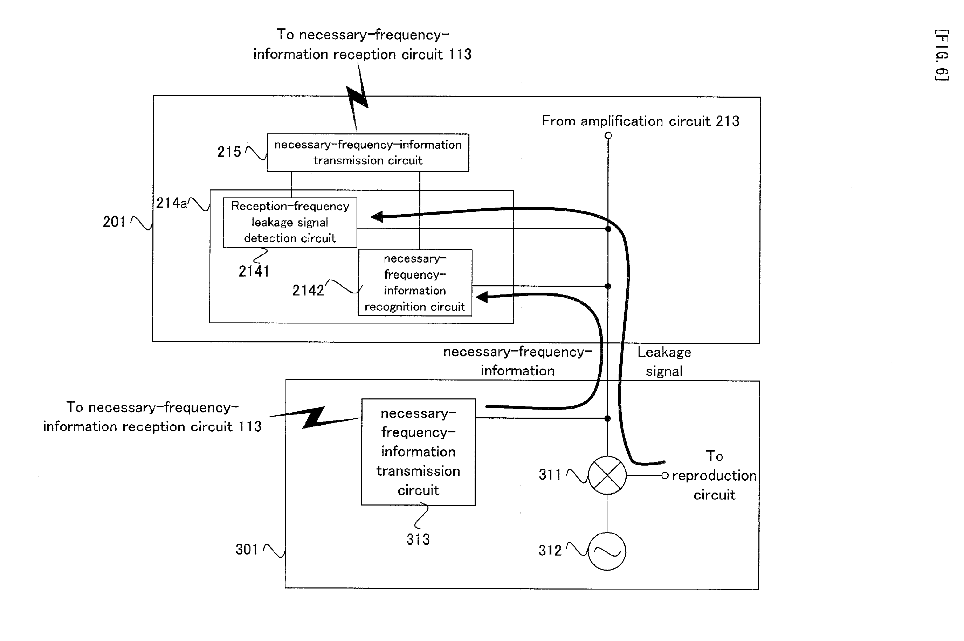

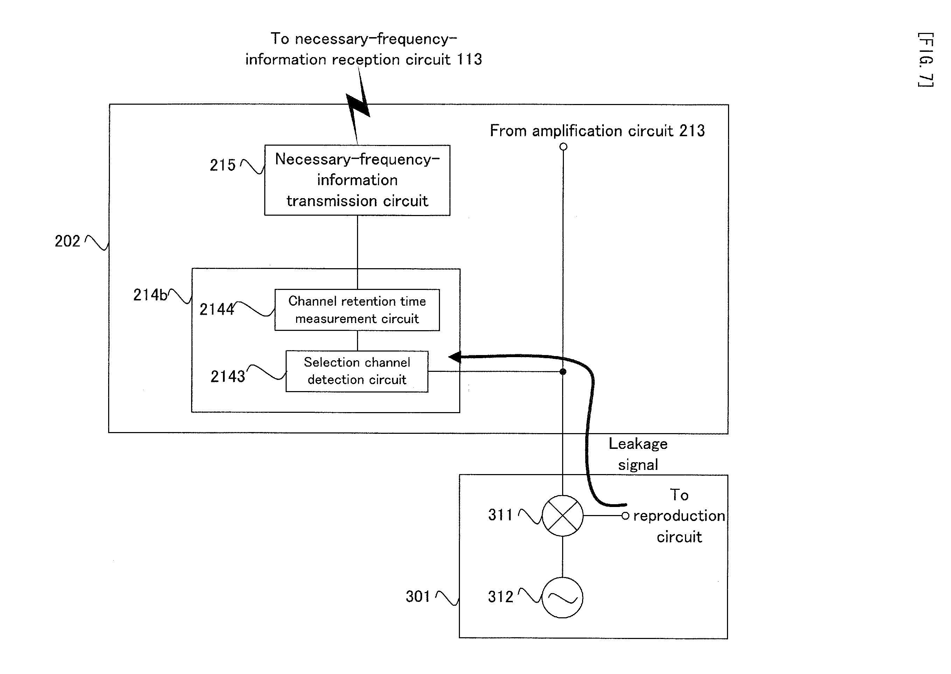

Next, with reference to FIG. 6 to FIG. 8, the more detailed structure of the transmission system 1 in the embodiment (in particular, the detailed structure related to the generation, transmission, and reception of the necessary-frequency-information) will be explained. FIG. 6 is a block diagram conceptually showing a more detailed first structure of the transmission system 1 in the embodiment. FIG. 7 is a block diagram conceptually showing a more detailed second structure of the transmission system 1 in the embodiment. FIG. 8 is a block diagram conceptually showing a more detailed third structure of the transmission system 1 in the embodiment.

As shown in FIG. 6, a necessary-frequency-information generation circuit 214a is provided with: a reception-frequency leakage signal detection circuit 2141; and a necessary-frequency-information recognition circuit 2142. Moreover, external reproduction equipment 301 is provided with; a mixer 311; a RF generator 312; and a necessary-frequency-information transmission circuit 313.

The reception-frequency leakage signal detection circuit 2141 is adapted to detect a leakage signal from the mixer 311. By detecting the leakage signal from the mixer 311 (i.e. the leakage signal of a signal which resonates on the mixer 311), it can detect the frequency of the channel information which is currently tuned (or synchronized) on the external reproduction equipment 301. This allows the reception-frequency leakage signal detection circuit 2141 to generate the necessary-frequency-information. Incidentally, in this case, a reception-side transmitter 201 including the reception-frequency leakage signal detection circuit 2141 may be mounted on an antenna jack of the external reproduction equipment 301. Alternatively, the reception-side transmitter 201 may be incorporated in an antenna system in the external reproduction equipment 301.

Moreover, the necessary-frequency-information transmission circuit 313 in the external reproduction equipment 301 is adapted to detect the frequency of the channel information which is currently tuned (or synchronized) on the external reproduction equipment 301. Moreover, it is also adapted to transmit the necessary-frequency-information which indicates the detected frequency, to the necessary-frequency-information recognition circuit 2142.

As described above, the necessary-frequency-information may be generated from the leakage signal from the mixer 311, or the external reproduction equipment 301 may generate the necessary-frequency-information which indicates the frequency of the channel information which is currently tuned (or synchronized) thereon. In any cases, the necessary-frequency-information can be preferably generated, and as a result, the frequency band to be transmitted can be preferably selected. That is, it is possible to select the frequency band corresponding to the channel information a user is currently watching and to transmit the broadcast signal, to which a relatively large transmission power is assigned to the channel information, from the transmission-side transmitter 100 to the reception-side transmitter 201. As a result, the user can watch the content related to the channel information the user is currently watching, in higher image quality or higher sound quality.

Moreover, the necessary-frequency-information may be generated so as to select the frequency band related to the channel information which has some relation with the channel information the user is currently watching. More specifically, the necessary-frequency-information may be generated so as to select the frequency band related to the channel information including the content in the same genre as that of the channel information which the user is currently watching. By this, even if the user changes the content which the user is watching (or shifts the channel information), it is possible to properly predict the channel information to which it is changed, to thereby change the content the user is watching without time lag.

Incidentally, in FIG. 6, both the structure that the necessary-frequency-information is generated from the leakage signal from the mixer 311 and the structure that the external reproduction equipment 301 generates the necessary-frequency-information which indicates the frequency of the channel information which is currently tuned (or synchronized) are employed. However, even if either one of the structures is employed, the necessary-frequency-information can be generated, obviously. Moreover, the necessary-frequency-information may be transmitted from the necessary-frequency-information transmission circuit 313 to the necessary-frequency-information reception circuit 113 in the transmission-side transmitter 100.

As another structure example, as shown in FIG. 7, a necessary-frequency-information generation circuit 214b is provided with: a selection channel detection circuit 2143; and a channel retention time measurement circuit 2144.

The selection channel detection circuit 2143 is adapted to detect a leakage signal from the mixer 311, as in the reception-frequency leakage signal detection circuit 2141. As a result, by detecting the leakage signal from the mixer 311, it can detect the frequency (or channel number) of the channel information which is currently tuned (or synchronized) on the external reproduction equipment 302.

The channel retention time measurement circuit 2144 is adapted to measure a retention time in the content related to each of the channel information (i.e. which is a time in which the content related to each of the channel information is watched, and which is referred to as "channel retention time" as occasion demands), on the basis of the frequency (or channel number) detected by the selection channel detection circuit 2143.

On the basis of the measured channel retention time, the necessary-frequency-information generation circuit 214b generates the necessary-frequency-information. For example, if it is found out that the retention is long and one-sided to the content related to certain channel information, the necessary-frequency-information which indicates that the frequency band corresponding to the certain channel information is transmitted is generated. Alternatively, if it is found out that the contents related to the plurality of channel information are watched in a relatively short time, it can be predicted that the zapping is performed. In this case, the necessary-frequency-information which indicates that each of the plurality of channel information is transmitted is generated.

Even in such construction, it is possible to preferably generate the necessary-frequency-information, to thereby preferably select the frequency band to be transmitted. In particular, since the necessary-frequency-information can be generated on the basis of a user's current attitude to watch the content related to the channel information, it is possible to generate the necessary-frequency-information which further suits the user's actual status.

As another structure example, as shown in FIG. 8, a necessary-frequency-information generation circuit 214c is provided with a reception circuit 2146. Moreover, external reproduction equipment 303 is provided with: a requested quality information transmission circuit 314; a channel retention time information transmission circuit 315; and a user information transmission circuit 316.

The reception circuit 2146 is adapted to receive requested quality information which is transmitted from the requested quality information transmission circuit 314, channel retention time information which is transmitted from the channel retention time information transmission circuit 315, and user information which is transmitted from the user information transmission circuit 316. Then, the necessary-frequency-information generation circuit 214c generates the necessary-frequency-information, on the basis of each of or at least one portion of the requested quality information, the channel retention time information, and the user information which are received.

The requested quality information transmission circuit 314 is adapted to transmit the requested quality information which indicates a requested transmission quality, to the reception circuit 2146 in each channel information (or in each frequency band corresponding to the channel information). As one example, for example, the requested quality information transmission circuit 314 transmits the requested quality information, which requests a relatively high transmission quality in the frequency band related to "1CH" and "5CH" out of the channel information corresponding to 80 channels and which requests a relatively low transmission quality in the frequency band other than the frequency band related to "1CH" and "5CH", to the reception circuit 2146. The necessary-frequency-information generation circuit 214c, which has received the requested quality information, generates the necessary-frequency-information so as to transmit such a broadcast signal that has a relatively high transmission power in which the high-quality transmission of the channel information can be performed with respect to the frequency band related to "1CH" and "5CH" and that has a minimum-necessary transmission power in the frequency band other than the frequency band related to "1CH" and "5CH. The requested quality information may be generated by the external reproduction equipment 303 or may be generated on the basis of a user's instruction.

The channel retention time information transmission circuit 315 is adapted to transmit the information which indicates a retention time in the content related to each of the channel information (i.e. the channel retention time information), to the reception circuit 2146. The necessary-frequency-information generation circuit 214c, which has received the channel retention time information, generates the necessary-frequency-information in the same aspect as that in the explanation in FIG. 7 described above.

The user information transmission circuit 316 is adapted to transmit the user information which indicates a preference or the like of a user which watches the content reproduced on the external reproduction equipment 303, to the reception circuit 2146. As one specific example of the user information, there are listed, for example, information which indicates a history about the user's selection / reference to a EPG (Electronic Program Guide), information which indicates the user's favorite channel information, information which indicates the user's favorite genre, information which indicates the channel information the user frequently watches, and the like. The necessary-frequency-information generation circuit 214c, which has received these various information, generates the necessary-frequency-information so as to transmit such a broadcast signal that has a relatively high transmission power in which the high-quality transmission of the channel information can be performed with respect to the frequency band related to the channel information the user frequently selects and refers to on the EPG, the user's favorite channel information, the channel information related to the user's favorite genre, the channel information the user frequently watches, or the like and that has a minimum necessary transmission power or a transmission power of zero in the frequency band other than the aforementioned frequency band.

Even in such construction, it is possible to preferably generate the necessary-frequency-information, to thereby preferably select the frequency band to be transmitted. In particular, if a reception-side transmitter 204 is connected to the external reproduction equipment 303 that can output the various information, such as the requested quality information, the channel retention time information, and the user information, the aforementioned structure can be particularly effective. Since the necessary-frequency-information can be generated on the basis of the various information, it is possible to generate the necessary-frequency-information which further suits the user's actual status.

### (4) Modified Example

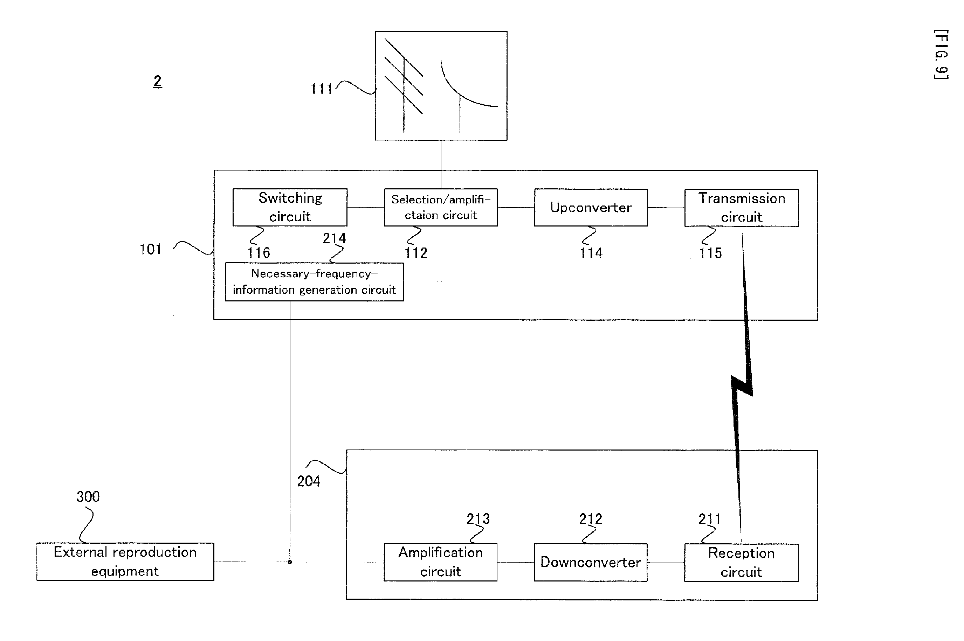

Next, with reference to FIG. 9, a modified example of the transmission system 1 in the embodiment will be explained. FIG. 9 is a block diagram conceptually showing the basic structure of a transmission system 2 in the modified example.

As shown in FIG. 9, in the transmission system 2 in the modified example, the transmission-side transmitter 100 is provided with a necessary-frequency-information generation circuit 214. In this case, the transmission-side transmitter 100 needs to obtain the various information (refer to FIG. 6 to FIG. 8) which is necessary to generate the necessary-frequency-information, from the external reproduction equipment 300. For example, it may be adapted to obtain the various information in the wireless transmission, or it may be adapted to obtain the various information in the wired transmission.

Even in such construction, the aforementioned various benefits can be received. In addition, it is possible to simplify the structure of the reception-side transmitter 200, to thereby reduce the size of the reception-side transmitter 200.

Incidentally, in the aforementioned embodiment, the transmission of the broadcast signal from the transmission-side transmitter 100 to the reception-side transmitter 200 is explained by using the specific example that uses the millimeter-wave-band signal. However, even if the broadcast signal is transmitted by using a signal other than the millimeter-wave-band signal, the structure in the aforementioned embodiment can be applied, obviously. In particular, if the same structure as that of the aforementioned embodiment is employed in the transmission system in which there is a limit in the transmission power as a whole or in the transmission system which is provided with the plurality of reception-side transmitters that possibly receive different channel information, it is possible to receive the aforementioned benefits, more preferably.

The present invention is not limited to the aforementioned embodiment, and various changes may be made without departing from the essence or spirit of the invention which can be read from the claims and the entire specification. A transmission system, a transmission-side transmitter, a transmission method, and a computer program, which involve such changes, are also intended to be within the technical scope of the present invention.

### Industrial Applicability

The transmission system, the transmission-side transmitter, the transmission method, and the computer program according to the present invention can be applied to a transmission system, a transmission-side transmitter, and a transmission method in which a received broadcast electric wave is wirelessly transmitted to each terminal. Moreover, they can be applied to the transmission system, the transmission-side transmitter, or the like which is mounted on various computer equipment for consumer use or for commercial use, or which can be connected to various computer equipment.

## Claims

1. A transmission system comprising: a transmission-side transmitter; and a reception-side transmitter,
said transmission-side transmitter comprising:
a first transmitting device for transmitting a plurality of channel information, each of which is transmitted from an exterior, by using corresponding plurality of frequency bands;
a selecting device for selecting one portion of the frequency bands corresponding to one portion of the plurality of channel information;
a second transmitting device for transmitting the one portion of the channel information, which is transmitted from the exterior, by using at least the selected one portion of the frequency bands; and
a switching device for switching between the transmission by said first transmitting device and the transmission by said second transmitting device,
said reception-side transmitter comprising:
a receiving device for receiving the plurality of channel information and/or the one portion of the channel information, which is transmitted from said transmission-side transmitter.

2. The transmission system according to clam 1, wherein
said reception-side transmitter further comprises a third transmitting device for transmitting necessary-channel-information which indicates channel information to be transmitted to said reception-side transmitter, out of the plurality of channel information, to said transmission-side transmitter, and
said selecting device selects the one portion of the frequency bands corresponding to the one portion of the channel information, on the basis of the transmitted necessary-channel-information.

3. The transmission system according to clam 2, wherein
said reception-side transmitter is connected to a reproducing apparatus which can reproduce such content that is based on desired channel information out of the plurality of channel information, by tuning a desired frequency band out of the plurality of frequency bands, and
said reception-side transmitter further comprises a generating device for generating the necessary-channel-information on the basis of a leakage signal which returns from the reproducing apparatus.

4. The transmission system according to clam 2, wherein said reception-side transmitter further comprises a generating device for generating the necessary-channel-information on the basis of at least one of a an EPG (Electronic Program Guide) selecting orientation of a user who watches content based on each of the plurality of channel information, the user's favorite content, the content which the user frequently watches, substance of the content, the content which the user is currently watching or recording, and the content related to the content which the user is currently watching or recording.

5. The transmission system according to clam 2, wherein said reception-side transmitter further comprises a generating device for generating the necessary-channel-information on the basis of a content watching time of a user who watches the content based on each of the plurality of channel information.

6. The transmission system according to clam 1, further comprising an amplifying device for amplifying a transmission power in the selected one portion of the frequency band.

7. The transmission system according to clam 1, further comprising an amplifying device for amplifying a transmission power in the selected one portion of the frequency bands such that the transmission power in the selected one portion of the frequency bands is greater than a transmission power in another frequency band of the plurality of frequency bands which is not selected by said selecting device,
said second transmitting device transmitting the plurality of channel information including the one portion of the channel information.

8. The transmission system according to clam 1, further comprising an attenuating device for attenuating a transmission power in an another frequency of the plurality of frequency bands which is not selected by said selecting device such that a transmission power in the selected one portion of the frequency bands is greater than the transmission power in the not-selected another frequency band,
said second transmitting device transmitting the plurality of channel information including the one portion of the channel information.

9. The transmission system according to clam 1, further comprising a normalizing device for making an entire transmission power of each of the plurality of channel information, which is transmitted by said first transmitting device, and at least the one portion of the channel information, which is transmitted by said second transmitting device, constant.

10. A transmission-side transmitter comprising:
a first transmitting device for transmitting a plurality of channel information, each of which is transmitted from an exterior, to a reception-side transmitter by using corresponding plurality of frequency bands;
a selecting device for selecting one portion of the frequency bands corresponding to one portion of the plurality of channel information;
a second transmitting device for transmitting the one portion of the channel information, which is transmitted from the exterior, by using at least the selected one portion of the frequency bands; and
a switching device for switching between the transmission by said first transmitting device and the transmission by said second transmitting device.

11. The transmission-side transmitter according to clam 10, further comprising a receiving device for receiving necessary-channel-information which indicates channel information to be transmitted to said reception-side transmitter, out of the plurality of channel information, the necessary-channel-information being transmitted from said reception-side transmitter, and
said selecting device selects the one portion of the frequency bands corresponding to the one portion of the channel information, on the basis of the received necessary-channel-information.

12. The transmission-side transmitter according to clam 10, further comprising an amplifying device for amplifying a transmission power in the selected one portion of the frequency bands.

13. The transmission-side transmitter according to clam 10, further comprising an amplifying device for amplifying a transmission power in the selected one portion of the frequency bands such that the transmission power in the selected one portion of the frequency bands is greater than a transmission power in another frequency band of the plurality of frequency bands which is not selected by said selecting device,
said second transmitting device transmitting the plurality of channel information including the one portion of the channel information, to said reception-side transmitter.

14. The transmission-side transmitter according to clam 10, further comprising an attenuating device for attenuating a transmission power in an another frequency of the plurality of frequency bands which is not selected by said selecting device such that a transmission power in the selected one portion of the frequency bands is greater than the transmission power in the not-selected another frequency band,
said second transmitting device transmitting the plurality of channel information including the one portion of the channel information, to said reception-side transmitter.

15. The transmission-side transmitter according to clam 10, further comprising a normalizing device for making an entire transmission power of each of the plurality of channel information, which is transmitted by said first transmitting device, and at least the one portion of the channel information, which is transmitted by said second transmitting device, constant.

16. A transmission method comprising:
a first transmitting process of transmitting a plurality of channel information, each of which is transmitted from an exterior, by using corresponding plurality of frequency bands;
a selecting process of selecting one portion of the frequency bands corresponding to one portion of the plurality of channel information;
a second transmitting process of transmitting the one portion of the channel information, which is transmitted from the exterior, by using at least the selected one portion of the frequency bands;
a switching process of switching between the transmission in said first transmitting process and the transmission in said second transmitting process; and
a receiving process of receiving the plurality of channel information and/or the one portion of the channel information, which is transmitted.

17. A computer program for transmission control to control a computer provided in the transmission system according to claim 1, the computer program making the computer function as at least one portion of said transmission-side transmitter and said reception-side transmitter.
